# EUROPEAN PATENT APPLICATION

(11) **EP 1 598 389 A1**
(43) Date of publication of application: **23.11.2005**
(21) Application number: 04714889.5
(22) Date of filing: 26.02.2004
(51) Int. Cl.: C08G 77/14

(54) **PROCESS FOR PRODUCING CATION-CURABLE SILICON COMPOUND**

(30) Priority: 27.02.2003 JP 2003052029; 27.02.2003 JP 2003052030
(71) Applicant: TOAGOSEI CO., LTD., Tokyo 105-8419 (JP)
(72) Inventor: TAJIMA, Seitarou, Toagosei Co., Ltd., Nagoya-shi, Aichi 415-0027 (JP); SUZUKI, Hiroshi, Toagosei Co., Ltd., Nagoya-shi, Aichi 415-0027 (JP)
(74) Representative: TBK-Patent
(86) International application number: PCT/JP2004/002285
(87) International publication number: WO 2004/076534

(57) **Abstract**

The present invention is a process for producing an oxetanyl group-containing cation-curable silicon compound where a hydrolysis co-condensation of (A) and (B) below is performed in the presence of an acidic catalyst in which pKa ≦ 5 (25°C) and boiling point ≦ 150°C (at atmospheric pressure); and is preferably a process for producing an oxetanyl group-containing cation-curable silicon compound where a hydrolysis condensation of (A), (B) and (C) below is performed in the presence of an acidic catalyst. 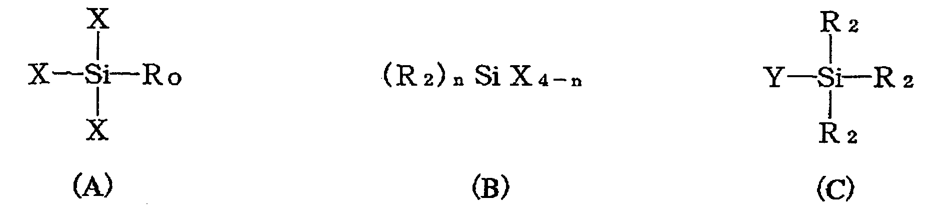 wherein R₀ is an oxetanyl group-containing organic functional group; X is a siloxane-bond-forming group; R₂ is an alkyl group, a cycloalkyl group or an aryl group; n = 0 - 2; and Y is a hydroxyl group or a siloxane-bond-forming group.

## Description

### Technical Field

The present invention relates to a process for producing a cation-curable silicon compound having an oxetanyl group by use of a hydrolysis condensation reaction.

The cation-curable silicon compound obtained according to the present invention is useful as a hard coating agent or a starting material for protective films for various substrates because of its excellent curability and ability to form a film having a high degree of hardness, and is also useful as a starting material for a resist due to the fact that the ratio of inorganic components therein can be increased to a high degree. Since the compound has high storage stability, it does not require refrigerated storage and is easy to handle.

### Background Art

Since radical polymerization is inhibited by oxygen in air, a polymerization should be performed in an inert atmosphere in order to rapidly and completely polymerize a radical-polymerizable monomer.

On the other hand, a cation-polymerizable monomer can be completely polymerized even in air since the polymerization reaction is not inhibited by oxygen.

As the cation-polymerizable monomer, compounds having an epoxy group, a vinylether group or an oxetanyl group are known.

While a cation-polymerizable monomer having an epoxy group has good heat resistance, leads to an excellent adhesiveness and is able to obtain a cured product being excellent in chemical resistance, it has been considered to be a hardly applicable material under recent environments where improvement of productivity is emphasized, since cation-curability is relatively low.

In addition, while the cation-polymerizable monomer having a vinylether group has relatively high cation-curability and sufficient performance with respect to productivity, the cured product thereof is so soft that it cannot be used for a hard coating agent and a protective film of various base materials.

In contrast to the materials described above, a compound having an oxetanyl group has high cation-curability and its cured product is excellent in physical strength. Therefore, a hard coating agent having an oxetanyl group has been frequently investigated, and particularly it has been studied how the compound having an oxetanyl group is introduced into a highly rigid cyclohexene skelton.

The method for introducing the oxetanyl group into the cyclohexene skelton is roughly divided into two ways. One is a method for taking advantage of a hydrosilylation reaction as disclosed in Japanese Patent Application Laid-Open (JP-A) H06-16804 that uses a raw material having Si-H bond and a hydrosilylation catalyst. However, this raw material is relatively expensive, and the hydrosilylation catalyst is difficult to remove.

The other is a method for taking advantage of a hydrolysis condensation reaction and it is considered to be industrially advantageous since a cheap raw material can be used and the catalyst is readily removed.

Although a chemical structure formula of a repeating unit of a hydrolysis condensation product of the compound represented by the formula (4) below has been described in USP No. 3,338,867, no description is found at all on the hydrolysis condensation process and the method for recovering the product.

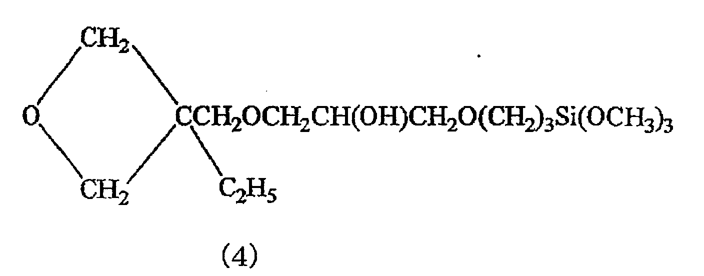

In Japanese Patent Application Laid-Open (JP-A) H11-29640, a method for producing a cation-curable composition comprising a silsesquioxane compound having an oxetanyl group, wherein a method for producing a cation-curable composition in which hydrolysis of a compound represented by the structural formula shown in the formula (5) below is performed under pH of 7 or more, is disclosed. 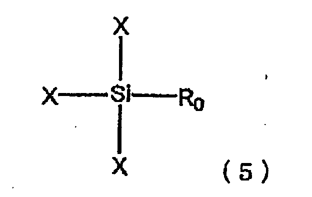 (wherein, R₀ is an organic functional group having an oxetanyl group, and X is a hydrolyzable group.)

In Japanese Patent Application Laid-Open (JP-A) H11-199673, a method for producing a cation-curable resin composition comprising a hydrolysis product obtained by hydrolyzing a mixture of a compound represented by the structural formula shown in the formula (6) and a reactive silicone having one or more hydrolysable group in one molecule, is disclosed. 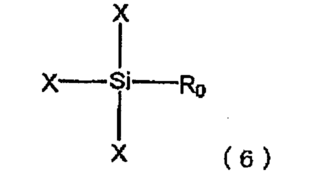 (wherein, R₀ is an organic functional group having an epoxy group or an oxetanyl group, and X is a hydrolyzable group.)

Since the methods for producing the cation-curable resin compositions disclosed in JP-A Nos. H11-29640 and H11-199673 are ones where hydrolysis condensation reaction is preformed in the presence of an alkaline catalyst such as ammonia, quite complicated operations were necessary for removing the alkaline catalyst after the hydrolysis condensation reaction.

On the other hand, in Japanese Patent Application Laid-Open (JP-A) H10-59984, an oligomer mixture of condensed alkylalkoxysilanes is disclosed. The method for producing this mixture is characterized in hydrolyzing and condensing an alkyltrialkoxysilane, which has an alkyl group in which the silane used has from 3 to 18 carbon atoms and a methoxy and/or an ethoxy group as alkyl group and alkoxy group, using water in a proportion of 1 mole or more per 1 mole of Si, and using HCl as a catalyst; and post-treating the reaction mixture obtained by distillation in a reaction vessel at a temperature of less than 95°C under a reduced pressure.

JP-A H10-59984 describes the reason for using the acid catalyst that HCl may be advantageously used as a hydrolysis catalyst that can almost be quantitatively removed, although no essential explanation is disclosed.

There are no compounds having a highly reactive functional group such as an oxetanyl group in alkoxysilane, as a material for contacting with an acid catalyst in the production method of an oligomer in JP-A H10-59984, which neither disclose nor suggest that the acid catalyst is applicable to the production of the cation-curable resin composition having an oxetanyl group.

In addition, Japanese Patent Application Laid-Open (JP-A) H08-113648 discloses a method for producing polysilsesquioxane silylated at the terminal characterized in mixing vinyltrialkoxysilane or organotrialkoxysilane having a vinyl group as a substituent and other organotrialkoxysilane to allow them to react with water in the presence of an acid catalyst; hydrolyzing and polycondensing the trialkoxysilane; and allowing thus obtained polymer to react with a silylating agent without isolating it to silylate the terminal group of the polymer. The reason for using the acid catalyst in this patent publication is to perform a series of steps of a polysilsesquioxane silylated producing step and a silylation step in one pot. There are no compounds having a highly cation-polymerizable functional group such as an oxetanyl group in alkoxysilane, as a material for contacting with an acid catalyst in the production method of a polysilsesquioxane silylated at the terminal in this patent publication, which neither disclose nor suggests that the acid catalyst is applicable to the production of the cation-curable silicon compound having an oxetanyl group.

Further, in Japanese Patent Application Laid-Open (JP-A) 2001-31767, an epoxy-functional organopolysiloxane resin is disclosed. One of objectives in this patent publication is to provide an amine-curable epoxy-functional organopolysiloxane resin by hydrolyzing and polycondensing an epoxy-containing trialkoxysilane and a specified silane. While it is disclosed in the patent publication that the acid catalyst is available in the hydrolysis and polycondensation step, the oxetane compounds are not described at all, and applicability of the acid catalyst to the production of a cation-curable silicon compound having an oxetanyl group is neither disclosed nor suggested.

### Disclosure of the Invention

An objective of the present invention is to provide a highly productive process for producing a cation-curable silicon compound having an oxetanyl group in which there is no need for a complex operation in the step of removing a catalyst or a solvent after hydrolysis condensation when the cation-curable silicon compound is produced by hydrolysis condensation reaction.

In order to achieve the objective above, the inventors investigated a production process performed under a neutral-to-acidic condition, circumventing investigation under alkaline conditions in which a purification step based on neutralization treatment is needed. As a result, the inventors perfected the present invention upon discovering that a cation-curable silicon compound having excellent storage stability and curability can be obtained even without performing a neutralization treatment step in the hydrolysis condensation reaction of a silicon compound having a specific oxetanyl group and a siloxane-bond-forming group, and a silicon compound having a siloxane-bond-forming group and no specific oxetanyl group in the presence of an acidic catalyst.

That is, the present invention is a process for producing a cation-curable silicon compound, comprising the step of performing hydrolysis co-condensation of an organosilicon compound (A) represented by the formula (1) below and an organosilicon compound (B) represented by the formula (2) below in the presence of an acidic catalyst whose pKa at 25°C is 5 or lower and whose boiling point at atmospheric pressure is 150°C or lower. 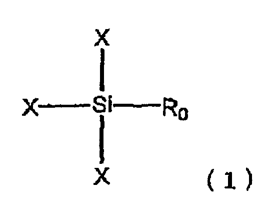 (in the formula above, R₀ is an organic functional group having an oxetanyl group; X is a hydrolyzable group; and each X may be the same or different.)

(R₂)ₙSiX₄₋ₙ (2)

(wherein, X is a siloxane-bond-forming group; R₂ is an alkyl group, a cycloalkyl group or an aryl group; and n is an integer from 0 to 2.)

In addition, the present invention is a process for producing a cation-curable silicon compound comprising the step of performing hydrolysis condensation of an organosilicon compound (A) represented by the formula (1) below, an organosilicon compound (B) having a siloxane-bond-forming group and no oxetanyl group represented by the (2) below, and an organosilicon compound (C) represented by the formula (3) below in the presence of an acidic catalyst. 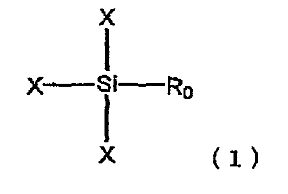 (in the formula above, R₀ is an organic functional group having an oxetanyl group; X is a siloxane-bond-forming group; and each X may be the same or different.)

(R₁)ₙSiX₄₋ₙ (2)

(wherein, X is a siloxane-bond-forming group; R₁ is an alkyl group, a cycloalkyl group or an aryl group; and n is an integer from 0 to 2.) 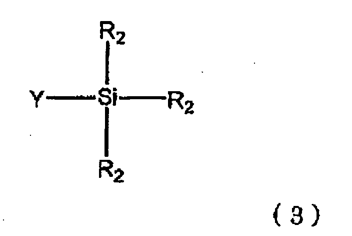 (wherein, Y is a hydroxyl group or a siloxane-bond-forming group; and R₂ is an alkyl group, a cycloalkyl group or an aryl group.)

### Best Mode for Carrying Out the Invention

The present invention will be described in detail hereinafter.

### [1] Starting material

The starting material in the present invention is the organosilicon compounds below.

### [1-1] Organosilicon compound (A)

The organosilicon compound (A) in the present invention is the compound represented by the formula (1) below. 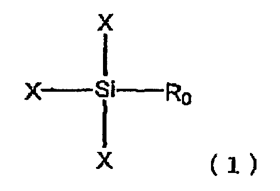 (in the formula above, R₀ is an organic functional group having an oxetanyl group; X is a siloxane-bond-forming group; and each X may be the same or different.)

The siloxane-bond-forming group X in the formula (1) above is not particularly limited so far as it is a hydrolyzable group. X is preferably a halogen atom, an alkoxy group, a cycloalkoxy group, an aryloxy group or the like; and X is more preferably an alkoxy group, a cycloalkoxy group or an aryloxy group. The reason for this is that since a hydrogen halide is formed by hydrolysis when X is a halogen atom, the atmosphere of the reaction system becomes strongly acidic more readily, and there is therefore a risk of the oxetanyl group undergoing ring opening.

The abovementioned "alkoxy group" includes methoxy group, ethoxy group, n- and i-propoxy groups, n-, i-, and t-butoxy groups, and the like. In addition, the "cycloalkoxy group" includes cyclohexyloxy group and the like, and the "aryloxy group" includes phenyloxy group and the like. Among these, the alkoxy group having carbon atoms of 1 to 3 is preferred as X because of the good hydrolysis properties of the alkoxy group. Further, particularly preferred is ethoxy group as X because it is readily available or because the hydrolysis reaction thereof is easy to control.

R₀ in the formula (1) above is an organic functional group having an oxetanyl group.

The preferred R₀ in the present invention is one having carbon atoms of 20 or less, and particularly preferred R₀ is the organic functional group represented by the structural formula shown in the formula (4) below. 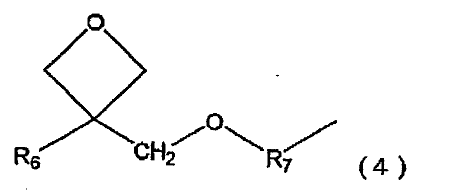 (wherein, R₆ is hydrogen atom or an alkyl group having carbon atoms of 1 to 6; and R₇ is an alkylene group having carbon atoms of 2 to 6.)

In this formula (4), R₆ is hydrogen atom or an alkyl group having carbon atoms of 1 to 6, and ethyl group is preferred. In addition, R₇ is an alkylene group having carbon atoms of 2 to 6, and propylene group is preferred. This is because an oxetane compound for forming this type of organic functional group is easily obtained or synthesized. If the carbon number in R₆ or R₇ in the formula (3) is 7 or more, it is not preferred because the surface hardness of the cured product tends to be inadequate.

### [1-2] Organosilicon compound (B)

The organosilicon compound (B) in the present invention is an organosilicon compound having a siloxane-bond-forming group and no oxetanyl group, and a preferable example thereof is the compound represented by the formula (2) below.

(R₂)ₙSiX₄₋ₙ (2)

(wherein, X is a siloxane-bond-forming group; R₂ is an alkyl group, a cycloalkyl group or an aryl group; and n is an integer from 0 to 2.)

In the formula (2) above, the "siloxane-bond-forming group" of X refers to a group whereby a siloxane bond can be formed by hydrolysis between the silicon atoms of the compound represented by the structural formula shown in the formula (1) above, and example thereof includes hydrogen atom, a hydroxyl group, an alkoxy group, a cycloalkoxy group, an aryloxy group, a halogen atom and the like. Among these, a species other than a halogen atom is preferred. The reason for this is that since a hydrogen halide is formed by hydrolysis when X' is a halogen atom, the atmosphere of the reaction system becomes strongly acidic with greater ease, and there is therefore a risk of the oxetanyl group or the like undergoing ring opening.

R₂ in the formula (2) above is a substituent selected from an alkyl group, a cycloalkyl group and an aryl group. The preferable carbon number of the alkyl group is 1 to 6, and more preferably 1 to 4. Example of the preferable alkyl group includes methyl group, ethyl group, n- and i-propyl groups, n-, i-, and t-butyl groups, and the like. Example of the "cycloalkyl group" includes cyclohexyl group and the like, and example of the "aryl group" includes phenyl group and the like.

Example of the compound represented by the formula (2) above is as follows.

That is, when n is 0, specific examples thereof are tetramethoxysilane and tetraethoxysilane. When n is 1, specific examples thereof are methyltrimethoxysilane, methyltriethoxysilane, methyltripropoxysilane, methyltriisopropoxysilane, ethyltrimethoxysilane, ethyltriethoxysilane, propyltriethoxysilane, butyltrimethoxysilane, cyclohexyltrimethoxysilane, cyclohexyltriethoxysilane, phenyltrimethoxysilane and phenyltriethoxysilane.

When n is 2, specific examples thereof are dimethyldimethoxysilane, dimethyldiethoxysilane, diethyldimethoxysilane, diethyldiethoxysilane, diphenyldimethoxysilane, diphenyldiethoxysilane, methylphenyldimethoxysilane and methylphenyldiethoxysilane.

The compound represented by the formula (2) above is introduced for the purpose of reducing the oxetanyl group concentration in the cation-curable silicon compound, lowering the viscosity without decreasing the molecular weight of the silsesquioxane compound, and decreasing the curing shrinkage ratio by decreasing the crosslinking density thereof, and especially preferred examples of this compound are methyltrimethoxysilane and methyltriethoxysilane.

### [1-3] Organosilicon compound (C)

The organosilicon compound (C) in the present invention is represented by the formula (3) below, and is a component which bonds with a terminal silanol group formed by a hydrolysis condensation process in the present invention and has an effect of improving a storage stability of a cation-curable composition obtained according to the present invention. 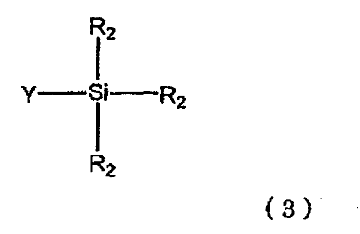 (wherein, Y is a hydroxyl group or a siloxane-bond-forming group; and R₂ is an alkyl group, a cycloalkyl group or an aryl group.)

R₂ in the formula (3) above is a substituent selected from an alkyl group, a cycloalkyl group and an aryl group. The preferable carbon number of the alkyl group is 1 to 6, and more preferably 1 to 4. Example of the preferable alkyl group includes methyl group, ethyl group, n- and i-propyl groups, n-, i-, and t-butyl groups, and the like. Example of the "cycloalkyl group" includes cyclohexyl group and the like, and example of the "aryl group" includes phenyl group and the like.

Example of the organosilicon compound represented by the formula (3) above is as follows.

That is, specific examples thereof are trimethylsilanol, triethylsilanol, tripropylsilanol, tributylsilanol, triphenylsilanol, trimethylmethoxysilane, trimethylethoxysilane, triethylmethoxysilane, triethylethoxysilane, tripropylmethoxysilane, tripropylethoxysilane, trimethylsilyl acetate, trimethylsilyl benzoate, triethylsilyl acetate, triethylsilyl benzoate, benzyldimethylmethoxysilane, benzyldimethylethoxysilane, diphenylmethoxymethylsilane, diphenylethoxymethylsilane, acetyltriphenylsilane, ethoxytriphenylsilane, hexamethyldisiloxane, hexaethyldisiloxane, hexapropyldisiloxane, 1,3-dibutyl-1,1,3,3-tetramethyldisiloxane, 1,3-diphenyl-1,1,3,3-tetramethyldisiloxane and 1,3-dimethyl-1,1,3,3-tetraphenyldisiloxane.

### [2] Production step

The production process of the present invention is characterized in that a hydrolysis co-condensation of the starting materials above is performed in the presence of an acidic catalyst whose pKa at 25°C is 5 or lower and whose boiling point at atmospheric pressure is 150°C or lower, and a step for removing an organic solvent used in the hydrolysis condensation reaction step usually includes after the hydrolysis co-condensation step.

Example of charging method of the abovementioned three types of starting material compounds includes a method whereby organosilicon compound (A), organosilicon compound (B), and organosilicon compound (C) are all charged at once (hereinafter referred to as a batch charging method), and a method whereby organosilicon compound (C) is added to reaction system after a hydrolysis co-condensation of organosilicon compound (A) and organosilicon compound (B) (hereinafter referred to as a divided charging method).

### [2-1] Charging ratio of starting material

In the present invention, no particular limitation is placed on the charging ratios of organic compounds A to C that are the starting material compounds, except that at least organic compound A and organic compound B be used in combination.

The preferable charging ratio of the organic compound B is in the range from 0.01 to 99 mol, and particularly from 0.1 to 90 mol, based on 1 mole of the starting material compound A

The preferable charging ratio of the organic compound C is less than the total amount of siloxane-bond-forming group (X) in organic compounds (A) and (B). For example, when a mol of the organic compound (A) and b mol of the organic compound (B) are charged, an amount of the organic compound (C) to be charged is preferably less than [3a + (4 - n)b] mol.

### [2-2] Hydrolysis condensation

### [2-2-1] Water

An amount of water used in the hydrolysis co-condensation step is preferably in the range from 0.5 to 10 equivalents and particularly from 1.5 to 5 equivalents when the amount of water needed in order to completely hydrolyze a siloxane-bond-forming groups in the organosilicon compounds (A) and (B) is equal to 1 equivalent.

### [2-2-2] pH

In the hydrolysis condensation step, the system is preferably an acidic atmosphere having pH in the range from 0.5 to 4.5 during cohydrolysis of the compound represented by the formula (1) above. In the case where the pH is less than 0.5, most of the oxetanyl groups undergo ring opening, and photo-curability are severely compromised. In the case at a weakly acidic pH of 5 to 6, rates of hydrolysis and condensation decrease and a long time is required for production. In the case at a neutral pH of 7, a desired cation-curable silicon compound is not obtained because hydrolysis of the organosilicon compound (A) does not progress to completion. In addition, the co-condensation of the organosilicon compounds (A) and (B), or the co condensation thereof with organosilicon compound (C) in the present invention induces gelation in an alkaline atmosphere having pH of 7 or higher according to the combination thereof, and production is completely impossible.

### [2-2-3] Catalyst

As described above, when the system in hydrolysis is set to pH in the range from 0.5 to 4.5 an acidic catalyst whose pKa is 5 or lower at 25°C and whose boiling point is 150°C or lower at atmospheric pressure is used. Acidic catalysts that are preferred for use include hydrofluoric acid, hydriodic acid, hydrobromic acid, hydrochloric acid, sulfurous acid, cyanoacetic acid, formic acid, acrylic acid, p-toluene sulfonic acid, acetic acid, lactic acid, and the like. Among these, hydrochloric acid is particularly preferred for its ready availability.

### [2-2-4] Organic solvent

The organic solvent used in hydrolysis is not particularly limited, for example, an alcohol such as methyl alcohol, ethyl alcohol and isopropyl alcohol; a ketone such as acetone and methylethylketone; tetrahydrofuran, toluene, 1,4-dioxane, hexane, ligroin and the like can be used. The reaction system is preferably made into a uniform solution using one type of solvent or a solvent mixture of two or more types of these solvents.

### [2-2-5] Reaction temperature and reaction time

The preferable reaction temperature in hydrolysis is independent of the type of starting material compound, and is in the range from 10 to 120°C, more preferably from 20 to 80°C, for both the batch charging method and the divided charging method. The suitable reaction time for hydrolysis is in the range between 2 and 30 hours, more preferably between 4 and 24 hours.

### [2-2-6] Product

The cation-curable silicon compound formed by hydrolysis co-condensation of the organosilicon compounds (A) and (B) (hereinafter abbreviated as co-condensate) comprises a silsesquioxane compound that is composed of three-dimensional (Si-O-Si) bond formed by hydrolysis of the hydrolyzable group X in the formulae (1) and (2) above, and that has an oxetanyl group.

The cation-curable silicon compound formed by hydrolysis co-condensation of the organosilicon compounds (A) through (C) (hereinafter abbreviated as co-condensate) is composed of one-dimensional to three-dimensional (Si-O-Si) bonds formed by hydrolysis of the siloxane-bond-forming group X in the formulae (1) and (2) above for both the batch charging method and the divided charging method, and has a structure in which the compound represented by the formula (3) above is condensed at the terminal end thereof.

The co-condensate may contain a linear silicone compound. Additionally, the co-condensate may also contain a silsesquioxane compound having a ladder structure, a cage structure or a random structure. The co-condensate may contain only one type of silsesquioxane compound, or may contain two or more types of silsesquioxane compounds having different structures or molecular weights. The co-condensate significantly varies according to the type and composition ratio of the organosilicon compounds (A) through (C), but a linear silicone compound is often contained therein in production by a batch charging method, and a three-dimensional silsesquioxane compound is often contained therein in production by a divided charging method.

Preferably 90% or more of the hydrolyzable groups in the organosilicon compounds (A) and (B) are condensed in the co-condensate, and it is more preferred that essentially all of the hydrolyzable groups be condensed. In the case where ratio of the residual hydrolyzable group exceeds 10%, hardness reduces due to an inadequate formation of silsesquioxane structures and there is a risk of decreased storage stability of the composition. A state in which "essentially all of the hydrolyzable groups are condensed" can be recognized, for example, by the fact that a peak based on the hydrolyzable group is not observed in NMR chart of the resultant silsesquioxane compound.

The co-condensate is composed of a silsesquioxane compound in which equivalent of the oxetanyl group is reduced. This compound has low viscosity and is easily handled, and is useful as a product in which curing shrinkage is minimized.

Since the batch charging method can lower molecular weight of the co-condensate itself, the co-condensate can be made less viscous and easier to handle. In the divided charging method, regardless of the fact that the resultant co-condensate has a high molecular weight, since a silanol group in the product is end-capped by the organosilicon compound (C), there are no hydrogen bonds between the silanol groups, the viscosity can be reduced, and the product is easy to handle. Furthermore, since the silanol group in the product is end-capped, a product having high storage stability in which there is extremely little change over time can be obtained.

The co-condensate obtained according to the present invention preferably has number-average molecular weight in the range from 600 to 5,000, and more preferably from 1,000 to 3,000. In the case where the number-average molecular weight is less than 600, an adequate hardness may not obtain in a cured film formed from the composition. In addition, since viscosity of the composition also lowers, it is easily splashed on the coated surface when the composition is used as a hard coating agent composition. On the other hand, in the case where the number-average molecular weight is more than 5,000, the viscosity of the composition becomes too high, it becomes difficult to handle, and coating properties of the composition decline when it is used as a hard coating agent composition. When this composition is used as a hard coating agent composition in particular, it is preferred that 50 wt% or more, more preferably 70 wt% or more, of the co-condensate as a whole be composed of a silsesquioxane compound having a number-average molecular weight in the range from 1,000 to 3,000. The number-average molecular weight in the present specification is given in terms of the equivalent polystyrene molecular weight as measured by gel permeation chromatography (GPC).

### [2-3] Removal of organic solvent

After hydrolysis condensation, in the case water unconsumed in hydrolysis is present, both the water and an organic solvent used in the hydrolysis condensation reaction step is removed. This step may be performed as a normal distillation operation under a normal pressure or a reduced pressure.

### Examples

The present invention will be described in further detail using examples.

### (Example 1)

200 g of isopropyl alcohol, 80.13 g (0.25 mol) of 3-ethyl-3-[[3 (triethoxysilyl)propoxy]methyl]oxetane (hereinafter referred to as "Oxe-TRIES") represented by the formula (7) below, and 126.59 g (0.71 mol) of methyltriethoxysilane were charged into a reactor equipped with a stirrer and a thermometer. Then, 52.32 g (H₂O: 2.87 mol; HCl: 14.3 mmol) of 1% hydrochloric acid was gradually added, and the contents were stirred at 25°C. The progress of the reaction was tracked by gel permeation chromatography, and the reaction was considered completed at the time when Oxe-TRIES was nearly exhausted (20 hours after addition of the mixture was started) . The solvent was then distilled under a reduced pressure, and a colorless and transparent product whose viscosity is 32,000 mPa•s was obtained.

The above product was stored in darkness for three months at 25°C, and when solubility in THF and viscosity were measured, its solubility in THF was good, and its viscosity was 52,000 mPa•s (viscosity increase ratio: 1630).

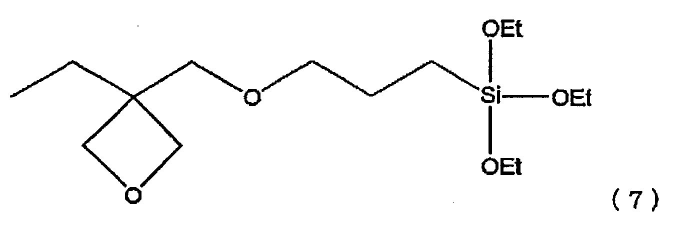

### (Example 2)

167 g of isopropyl alcohol, 95.15 g (0.3 mol) of Oxe-TRIES, and 72.11 g (0.3 mol) of phenyltriethoxysilane were charged into a reactor equipped with a stirrer and a thermometer. Then, 32.7 g (H₂O: 1.8 mol; HCl: 9 mmol) of 1% hydrochloric acid was gradually added, and the contents were stirred at 25°C. The progress of the reaction was tracked by gel permeation chromatography, and the reaction was considered completed at the time when Oxe-TRIES was nearly exhausted (20 hours after addition of the mixture was started).

The solvent was then distilled under a reduced pressure, and a colorless and transparent product whose viscosity is 21,000 mPa•s was obtained. The above product was stored in darkness for three months at 25°C, and when solubility in THF and viscosity were measured, its solubility in THF was good, and its viscosity was 36,000 mPa•s (viscosity increase ratio: 171%).

### (Example 3)

50 g of isopropyl alcohol, 32.05 g (0.1 mol) of Oxe-TRIES, and 10.42 g (0.05 mol) of tetraethoxysilane were charged into a reactor equipped with a stirrer and a thermometer. Then, 7.28 g (H₂O: 0.40 mol; HCl: 2 mmol) of 1% hydrochloric acid was gradually added, and the contents were stirred at 25°C. The progress of the reaction was tracked by gel permeation chromatography, and the reaction was considered completed at the time when Oxe-TRIES was nearly exhausted (20 hours after addition of the mixture was started). The solvent was then distilled under a reduced pressure, and a colorless and transparent product whose viscosity is 25,000 mPa•s was obtained. The above product was stored in darkness for three months at 25°C, and when solubility in THF and viscosity were measured, its solubility in THF was good, and its viscosity was 39,000 mPa•s (viscosity increase ratio: 156%).

### (Example 4)

The same procedure was followed as in Example 1 except that 52.58 g (H₂O: 2.87 mol; acetic acid: 14.3 mmol) of 1.6% acetic acid were used, and a colorless and transparent product having a viscosity of 31,000 mPa•s was obtained.

The above product was stored in darkness for three months at 25°C, and when solubility in THF and viscosity were measured, its solubility in THF was good, and its viscosity was 49,000 mPa•s (viscosity increase ratio: 158%).

### (Example 5)

The same procedure was followed as in Example 1 except that 200 g of methylethylketone were used, and a colorless and transparent product having a viscosity of 33,000 mPa•s was obtained.

The above product was stored in darkness for three months at 25°C, and when solubility in THF and viscosity were measured, its solubility in THF was good, and its viscosity was 53,000 mPa•s (viscosity increase ratio: 161%).

### (Comparative Example 1)

200 g of isopropyl alcohol, 80.13 g (0.25 mol) of Oxe-TRIES, and 126.59 g (0.71 mol) of methyltriethoxysilane were charged into a reactor equipped with a stirrer and a thermometer. Then, 53.01 g (H₂O: 2.87 mol; HCl: 14.3 mmol) of 2.45% aqueous solution of tetramethylammonium hydroxide were gradually added, and the contents were stirred at 25°C. The progress of the reaction was tracked by gel permeation chromatography, but the contents in the reactor had gelled at the time when Oxe-TRIES was nearly exhausted (20 hours after addition of the mixture was started), and a product could not be obtained.

### (Comparative Example 2)

200 g of isopropyl alcohol, 80.13 g (0.25 mol) of Oxe-TRIES, and 126.59 g (0.71 mol) of methyltriethoxysilane were charged into a reactor equipped with a stirrer and a thermometer. Then, 51.71 g (H₂O: 2.87 mol) of pure water were gradually added, and the contents were stirred at 65°C. The progress of the reaction was tracked by gel permeation chromatography, but Oxe-TRIES peak had not disappeared even after 20 hours from the start of addition of the mixture, and a product could not be obtained.

### (Example 6)

60 g of isopropyl alcohol, 115.38 g (360 mmol) of Oxe-TRIES, 32.09 g (180 mmol) of methyltriethoxysilane, and 14.62 g (90 mmol) of hexamethyldisiloxane were charged into a reactor equipped with a stirrer and a thermometer. Then, 29.2 g of 1% hydrochloric acid were gradually added, and the contents were stirred at 25°C. The progress of the reaction was tracked by gel permeation chromatography, and the reaction was considered completed at the time when Oxe-TRIES was nearly exhausted (20 hours after addition of the mixture was started). The solvent was then distilled under a reduced pressure, and a colorless and transparent product whose viscosity is 6,600 mPa•s was obtained.

The above product was stored in darkness for three months at 25°C, and when solubility in THF and viscosity were measured, its solubility in THF was good, and its viscosity was 6,700 mPa•s (viscosity increase ratio: 102%).

### (Example 7)

50 g of isopropyl alcohol, 32.05 g (100 mmol) of Oxe-TRIES, and 17.83 g (100 mmol) of methyltriethoxysilane were charged into a reactor equipped with a stirrer and a thermometer. Then, 11 g of 1% hydrochloric acid were gradually added, and the contents were stirred at 25°C. The progress of the reaction was tracked by gel permeation chromatography. And when Oxe-TRIES was nearly exhausted (20 hours after addition of the mixture was started), 0.65 g (4 mmol) of hexamethyldisiloxane was added dropwise therein, and the product was heated and stirred for one hour at 50°C. The solvent was then distilled under a reduced pressure, and a colorless and transparent product whose viscosity is 20,000 mPa•s was obtained. The above product was stored in darkness for three months at 25°C, and when solubility in THF and viscosity were measured, its solubility in THF was good, and its viscosity was 21,600 mPa•s (viscosity increase ratio: 108%).

### (Example 8)

40 g of isopropyl alcohol, 32.05 g (100 mmol) of Oxe-TRIES, 10.42 g (50 mmol) of tetraethoxysilane, and 4.06 g (25 mmol) of hexamethyldisiloxane were charged into a reactor equipped with a stirrer and a thermometer. Then, 10 g of 1% hydrochloric acid were gradually added, and the contents were stirred at 25°C. The progress of the reaction was tracked by gel permeation chromatography, and the reaction was considered completed at the time when Oxe-TRIES was nearly exhausted (20 hours after addition of the mixture was started). The solvent was then distilled under a reduced pressure, and a colorless and transparent product whose viscosity is 13,000 mPa•s was obtained. The above product was stored in darkness for three months at 25°C, and when solubility in THF and viscosity were measured, its solubility in THF was good, and its viscosity was 17,000 mPa•s (viscosity increase ratio: 131%).

3 weight parts of bis(dodecylphenyl)iodonium hexafluoroantimonate as a cationic photopolymerization initiator were added with respect to 100 weight parts of the compound obtained in Examples 1 through 8 above, 10 weight parts of toluene for lowering viscosity were also added, and cation-curable resin compositions A through H were prepared.

The types of compounds used in compositions A through H are shown in Table 1 below.

**Table 1**

| Composition | Compound |
|---|---|
| A | Coumpound obtained in Example 1 |
| B | Coumpound obtained in Example 2 |
| C | Coumpound obtained in Example 3 |
| D | Coumpound obtained in Example 4 |
| E | Coumpound obtained in Example 5 |
| F | Coumpound obtained in Example 6 |
| G | Coumpound obtained in Example 7 |
| H | Coumpound obtained in Example 8 |

### [Evaluation of cation-curable resin composition]

The curability and pencil hardness for cation-curable resin compositions A through H were evaluated using the following methods.

### (1) Curability

A composition was applied on a glass substrate to a thickness of approximately 20 µm using a bar coater, ultraviolet irradiation was performed under the condition below, and the number of irradiations was measured until there was no more surface tackiness.

### [UV irradiation condition]

Lamp: 80 W/cm high-pressure mercury lamp
Lamp height: 10 cm; conveyor speed: 10 m/min of irradiation
Atmosphere: in air

### (2) Pencil hardness

Each composition was applied on a steel plate and a glass substrate to a thickness of approximately 20 µm using a bar coater, ultraviolet irradiation was performed under the condition above, and a cured film was obtained.

This cured film was left for 24 hours in a thermostatic chamber at a temperature of 25°C and a relative humidity of 60%, and then pencil hardness of the surface was measured according to JIS K5400. The results thereof were shown in Table 2 below. As is apparent from this table, since the product obtained according to the production process of the present invention has an oxetanyl group, excellent cation-curability are obtained, and the resultant cured film is extremely hard due to the fact that it is a film of a silsesquioxane compound.

**Table 2**

| | Curability | Pencil hardness (steel plate) | | Pencil hardness (glass plate) | |
|---|---|---|---|---|---|
| | Number of passes | Flaw | Peeled | Flaw | Peeled |
| Composition A | 7 | 5H | 6H | 5H | >9H |
| Composition B | 6 | 5H | 6H | 6H | 8H |
| Composition C | 5 | 5H | 6H | 6H | >9H |
| Composition D | 7 | 5H | 6H | 5H | >9H |
| Composition E | 7 | 5H | 6H | 5H | >9H |
| Composition F | 4 | 5H | 6H | 6H | >9H |
| Composition G | 5 | 5H | 6H | 6H | >9H |
| Composition H | 5 | 5H | 6H | 6H | >9H |

### Industrial Applicability

In the process for producing a cation-curable resin composition according to the present invention, there are fewer steps following hydrolysis condensation compared with the conventional production process and it is useful as a highly productive process for producing a cation-curable resin composition, since there is no need for a neutralization step after hydrolysis condensation reaction, and purification can be performed simply by removing an organic solvent by a common distillation operation.

In addition, since the production process of the present invention produces only a small quantity of waste product, it places little strain on the environment. The composition obtained by the production process of the present invention also has no need for refrigerated storage and is easy to handle due to its high storage stability.

## Claims

1. A process for producing a cation-curable silicon compound, comprising the step of performing hydrolysis co-condensation of an organosilicon compound (A) represented by the formula (1) below and an organosilicon compound (B) represented by the formula (2) below in the presence of an acidic catalyst whose pKa at 25°C is 5 or lower and whose boiling point at atmospheric pressure is 150°C or lower. 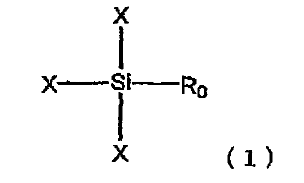 (in the formula above, R₀ is an organic functional group having an oxetanyl group; X is a hydrolyzable group; and each X may be the same or different.)
(R₂)ₙSiX₄₋ₙ (2)
(wherein, X is a siloxane-bond-forming group; R₂ is an alkyl group, a cycloalkyl group or an aryl group; and n is an integer from 0 to 2.)

2. A process for producing a cation-curable silicon compound comprising the step of performing hydrolysis condensation of an organosilicon compound (A) represented by the formula (1) below, an organosilicon compound (B) having a siloxane-bond-forming group and no oxetanyl group represented by the formula (2) below, and an organosilicon compound (C) represented by the formula (3) below in the presence of an acidic catalyst. 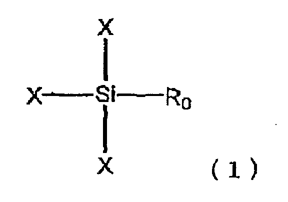 (in the formula above, R₀ is an organic functional group having an oxetanyl group; X is a siloxane-bond-forming group; and each X may be the same or different.)
(R₁)ₙSiX₄₋ₙ (2)
(wherein, X is a siloxane-bond-forming group; R₁ is an alkyl group, a cycloalkyl group or an aryl group; and n is an integer from 0 to 2.) 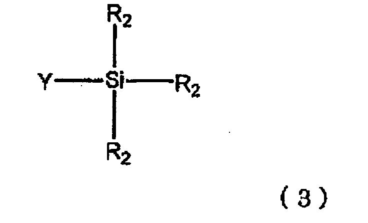 (wherein, Y is a hydroxyl group or a siloxane-bond-forming group; and R₂ is an alkyl group, a cycloalkyl group or an aryl group.)

3. The process for producing a cation-curable silicon compound according to Claim 1 or 2, wherein R₀ in the formula (1) above is an organic functional group represented by the structural formula shown in the formula (4) below. 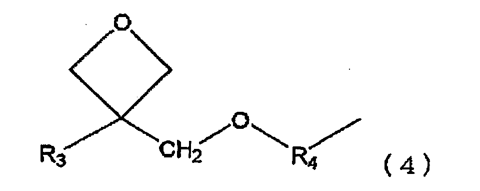 (wherein, R₃ is hydrogen atom or an alkyl group having carbon atoms from 1 to 6; and R₄ is an alkylene group having carbon atoms from 2 to 6.)

4. The process for producing a cation-curable silicon compound according to Claim 1 or 2, wherein charging amount of said acidic catalyst is 1/50 mol to 1/200 mol with respect to the total amount of said organosilicon compound (A) and said organosilicon compound (B).
